# EUROPÄISCHE PATENTSCHRIFT

(11) **EP 1 336 451 B1**
(45) Veröffentlichungstag und Bekanntmachung des Hinweises auf die Patenterteilung: **08.12.2010**
(21) Anmeldenummer: 03002628.0
(22) Anmeldetag: 10.02.2003
(51) Int. Cl.: B23Q 1/70, F16C 25/08

(54) **Schnellauf-Spindeleinheit für Werkzeugmaschine**
High-speed spindle unit for machine tools
Unité de broche à haute vitesse pour machines-outils

(30) Priorität: 14.02.2002 DE 20202260 U
(43) Veröffentlichungstag der Anmeldung: 20.08.2003
(73) Patentinhaber: DECKEL MAHO Pfronten GmbH, 87459 Pfronten (DE)
(72) Erfinder: Geissler, Alfred, 87459 Pfronten (DE)
(74) Vertreter: Beetz & Partner

(56) Entgegenhaltungen:
- DE-A- 3 710 185
- US-A- 4 657 412

## Beschreibung

Die Erfindung betrifft eine Schnellauf-Spindeleinheit für Werkzeugmaschinen zur spanenden Bearbeitung von Werkstücken der im Oberbegriff des Patentanspruchs 1 angegebenen Gattung.

Moderne Schnellauf-Spindeln werden mit Drehzahlen bis zu einigen zigtausend Upm betrieben, was naturgemäß nur bei voll funktionsfähigen und hochpräzisen Lagerungen möglich ist. Die in derartigen Schnellauf-Spindeleinheiten eingesetzten Präzisionslager für die Spindel sind u.a. gegenüber Druck- und Stoßbelastungen hochempfindlich, die auf das Werkzeug und den Spindelkörper einwirken und insbesondere über die vordere Wälzlagerung auf das Gehäuse übertragen werden. Dies gilt einmal für Schlag- und Stoßbelastungen des eingespannten Werkzeugs und/oder der Werkzeugspindel, die außerhalb eines Bearbeitungsvorganges bei Fahrbewegungen des Werkstücks und/oder der Spindeleinheit durch Kollision mit einem Maschinenteil oder dem Werkstück verursacht werden. Daneben können extrem hohe Belastungen auch während eines Bearbeitungsvorganges auftreten, beispielsweise bei übergroßem Vorschub, falsch gewähltem Spanwerkzeug, Änderung der Materialstruktur im Werkstück. In beiden Belastungsfällen können die schlagartigen Stoßbelastungen bzw. die Belastungsspitzen die vordersten hochgenauen Wälzlager der Spindel beschädigen und dadurch die hier besonders kritischen Rundlaufeigenschaften beeinträchtigen mit der Folge einer möglichen dauerhaften Beschädigung der beteiligten Bauteile, was zwangsläufig einen Austausch der Spindeleinheit zur Folge hat.

Aus der US 4 657 412 A ist eine Lageranordnung für eine Spindeleinheit einer Fräs- und Bohrmaschine bekannt, die eine drehbare Vorrichtung zum Aufbringen einer Vorspannung enthält. Diese Vorrichtung soll eine genaue Vorspannung der vorderen und hinteren Wälzlager der Spindel erzeugen und die durch Temperatur- bzw. Drehzahländerungen verursachten nachteiligen Wirkungen kompensieren. Zu diesem Zweck ist außerhalb der Spindeleinheit ein Motor vorgesehen, dessen Ausgangswelle über ein Ritzel mit einem Zahnrad in Eingriff steht, das am rückwärtigen Endteil zwischen bzw. hinter den beiden Spindel-Wälzlagern angeordnet ist. Zwischen den Innenringen der beiden Spindel-Wälzlager ist eine Distanzhülse eingespannt. An dem hinteren, dem Innenkegel für die Werkzeugaufnahme entgegengesetzten Ende des Spindelgehäuses ist ein Gehäuseabschlußring durch mehrere koaxiale Schraubbolzen mit dem Spindelgehäuse fest verbunden, der eine nach radial innen weisende Ringschulter aufweist. Diese Ringschulter wirkt mit einem Gewindering zusammen, der auf dem hinteren Endteil der drehangetriebenen Spindel aufgeschraubt ist. Zwischen einer äußeren Umfangsfläche dieses Gewinderings und einer inneren Umfangsfläche der an der Gehäuseabschlußbuchse ausgebildeten Ringschulter ist ein Umfangsspalt vorhanden, der eine berührungslose Drehbewegung der Spindel ermöglicht. Ferner ist ein Radialspalt zwischen einem verdickten Ende des Gewinderinges und der Ringschulter der Gehäuseabschlußbuchse vorgesehen. Zwar ändert sich die Spaltweite des Radialspaltes und auch des Umfangsspaltes mit sich ändernden Belastungen, ein direkter Anlagekontakt der jeweiligen Flächenpaarungen ist jedoch nicht vorgesehen und hätte auch aufgrund der Anordnung dieser Spalte am rückwärtigen Ende der Arbeitsspindel keine Wirkungen.

Aufgabe der Erfindung ist es, eine Schnellauf-Spindeleinheit zu schaffen, bei der Beschädigungen der vorderen Lager der Spindel durch mechanische Belastungsspitzen sowie durch Überlast verursachte Schäden weitgehend vermieden werden.

Diese Aufgabe wird erfindungsgemäß durch die im Anspruch 1 angegebenen Merkmale gelöst.

Wenn bei inaktivem, z.B. stillstehendem, Werkzeug die Spindel beispielsweise durch Kollision mit dem Werkstück stoßartig axial belastet wird, werden die Stoßkräfte bis zu einer gewissen akzeptierbaren Größenordnung über den eingespannten Werkzeughalter, den Spindelkörper und den Innenring des vorderen Wälzlagers unter zulässiger elastischer Verformung dieser Bauteile schadlos auf das Gehäuse übertragen. Übersteigen diese Stoßbelastungen die vorgegebene Größenordnung, dann gelangt der am hinteren Spindelkörper befestigte Gewindering nach Schließen des Spaltes mit der zugeordneten Stirnfläche des Gehäuseabschlußrings in Druckkontakt, wodurch dann die Druckspitzen direkt in das Gehäuse eingeleitet werden und die Lagerbauteile der Einwirkung dieser Belastungsspitzen entzogen sind. Wenn auf das Werkzeug während eines Bearbeitungsvorganges axiale Belastungen einwirken, die innerhalb vorgegebener Grenzen liegen, werden diese vom Spindelkörper in der oben angegebenen Weise über die Wälzlager auf das Gehäuse übertragen, wobei sich die Weite des erfindungsgemäßen Spaltes entsprechend der Größe der Belastung verringert. Erst nach vollständigem Schließen dieses Spaltes bei hohen Belastungen erfolgt eine Druckanlage der rotierenden hinteren Stirnfläche des Gewinderinges an dem vorderen Stirnflächenabschnitt des drehfesten Gehäuseabschlußringes mit der sich daraus ergebenden Folge einer starken Erwärmung der Reibflächenpaarung. Die vorstehend beschriebene Funktion des erfindungsgemäßen Spalts ergibt einmal eine Entlastung der Wälzlagerteile gegenüber anormal großen Belastungen der Spindel. Da die Einzelflächen der Reibflächenpaarung regelmäßig anlaufen, d.h. sich farblich verändern, kann durch Augenscheinnahme bei Wartungsarbeiten festgestellt werden, ob die Spindel im Betrieb mit vom Hersteller nicht genehmigten übergroßen Belastungen betrieben worden ist.

Zur Erzielung der beabsichtigten Effekte ist die Bemessung der erfindungsgemäßen Spalte von wesentlicher Bedeutung, wobei dieder Spaltweite für unterschiedliche Spindelausführungen auf Festlegung der Grundlage von verschiedenen Konstruktions- und Betriebsparametern für die jeweilige Spindeleinheit erfolgt. Als geeignet haben sich bisher Spaltweiten im Bereich von 50 bis 100 µm erwiesen.

Die vorstehend erläuterten Effekte gelten in entsprechender Weise für quer oder schräg zur Spindelachse gerichtete Belastungen, zu deren Kompensation bzw. Ausgleich ein innerhalb vorgegebener Grenzen genau dimensionierter Umfangsspalt zwischen dem Distanzring und dem Gehäuseabschlußring vorgesehen ist.

Um den nachteiligen Wirkungen von Reibschweißvorgängen zu begegnen, zeichnet sich eine vorteilhafte Weiterbildung der Erfindung dadurch aus, daß der Spindel-Bauteil und der Gehäuse-Bauteil zumindest im Bereich ihrer Reibflächenpaarung aus einem gegen Reibverschweißung widerstandsfähigen Material bestehen. Dadurch wird dem Entstehen einer durch Reibschweißen verursachten festen Verbindung dieser Bauteile entgegengewirkt. Zur Erzielung dieses Effektes können eine oder auch beide dieser Reibflächen auch mit einem gegen Reibverschweißung widerstandsfähigem Material beschichtet sein.

Weitere Besonderheiten und Vorzüge der Erfindung ergeben sich aus der folgenden Beschreibung bevorzugter Ausführungsbeispiele anhand der Zeichnung. Es zeigen
- Fig. 1: einen Axialschnitt des vorderen Endbereichs einer Schnelllauf-Spindeleinheit,
- Fig. 2: eine vergrößerte Detailansicht der Fig. 1 und
- Fig. 3: einen vergrößerten Ausschnitt der oberen Spindellagerung eines weiteren Ausführungsbeispiels.

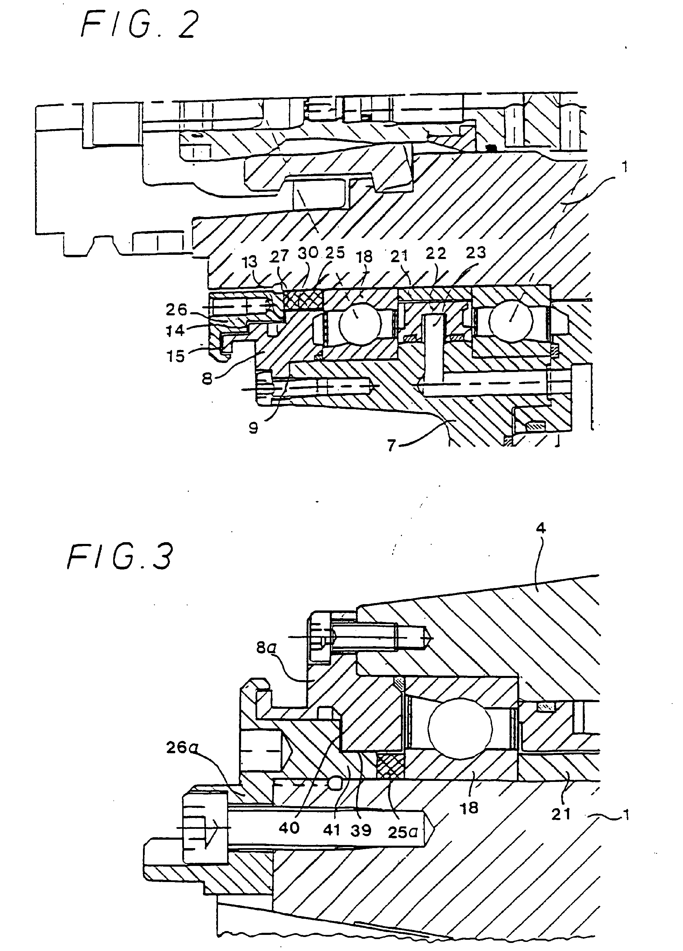

Die dargestellte Schnellauf-Spindeleinheit enthält eine Spindel 1, die rückseitig von einem - nicht dargestellten - Antriebsaggregat angetrieben wird und deren vorderer Endabschnitt in zwei hintereinander angeordneten Wälzlagern 2, 3 in einem mehrteiligen Gehäuse 4 gelagert ist. Das Gehäuse 4 enthält ein äußeres Spindelgehäuse 5, in dem ein Gehäuseteil 6 und ein vorderes Lagergehäuse 7 aufgenommen sind. An der vorderen Stirnseite des Lagergehäuses 7 ist ein im Querschnitt profilierter Gehäuseabschlußring 8 durch Schrauben 9 befestigt. Dieser Gehäuseabschlußring 8 weist an seiner hinteren, dem vorderen Wälzlager 2 zugekehrten radialen Stirnseite eine mittlere Ringnut 10 auf und stützt sich mit seinem radial äußeren Abschnitt 11 an dem äußeren gehäusefesten Lagerring 12 dieses Wälzlagers 2 ab. Wie insbesondere aus Figur 2 ersichtlich, ist der nach vorn weisende Teil dieses Gehäuseabschlußringes 8 stufenförmig ausgebildet mit je einer vorderen Radialfläche 13, 14, 15 pro Stufe.

In einer Zentralbohrung der Spindel 1 ist eine Spannzange 16 zum Festspannen des Werkzeughalters 17 in der stirnseitigen Ausnehmung der Spindel 1 vorgesehen, die in herkömmlicher Weise ausgebildet ist und aus diesem Grunde im folgenden nicht weiter beschrieben wird. Die inneren Lagerschalen bzw. Innenringe 18, 19 der beiden Wälzlager 1, 2 haben einen etwa rechteckigen Querschnitt und sitzen drehfest auf dem vorderen durch eine Stufe 20 verjüngten Abschnitt der Spindel 1, wobei sich der Innenring 19 des hinteren Wälzlagers 3 an dieser Stufe 20 abstützt. Zwischen den Innenringen 18, 19 der beiden Wälzlager 2, 3, deren Wälzkörper als Kugeln ausgebildet sind, ist ein Abstandsring 21 spielfrei und drehfest auf der Spindel 1 befestigt, der von einem im Querschnitt profilierten Kühlring 22 umgeben ist. Dieser Kühlring 22 weist in seinen beiden Stirnflächen je eine umlaufende Ringnut sowie eine zentrale Ringkammer 23 auf, in die ein in den Gehäuseteilen 7, 6 und 5 abgewinkelt verlaufender Kühlkanal 24 ausmündet. Wie insbesondere aus Fig. 2 ersichtlich, befinden sich die radial äußeren Abschnitte der Stirnflächen dieses Kühlrings 22 in Anlage an den beiden äußeren Lagerringen der Wälzlager 2, 3.

An der vorderen Stirnseite des Innenrings 18 des vorderen Wälzlagers 2 ist ein Distanzring 25 auf der Spindel 1 drehfest angeordnet, dessen hintere Stirnfläche an der vorderen Stirnfläche des Innenrings 18 anliegt.

Auf dem vordersten Endabschnitt der Spindel 1 ist eine Gewindebuchse 26 fest aufgeschraubt, die an ihrer äußeren Umfangsfläche mehrere Stufen aufweist, welche den Stufen 13, 14, 15 des Gehäuseabschlußrings 8 in der dargestellten Weise entsprechen. Die hintere radiale Stirnfläche 27 dieser Gewindebuchse 26 stützt sich mit einem radial inneren Abschnitt an der vorderen Stirnfläche des Distanzringes 25 ab.

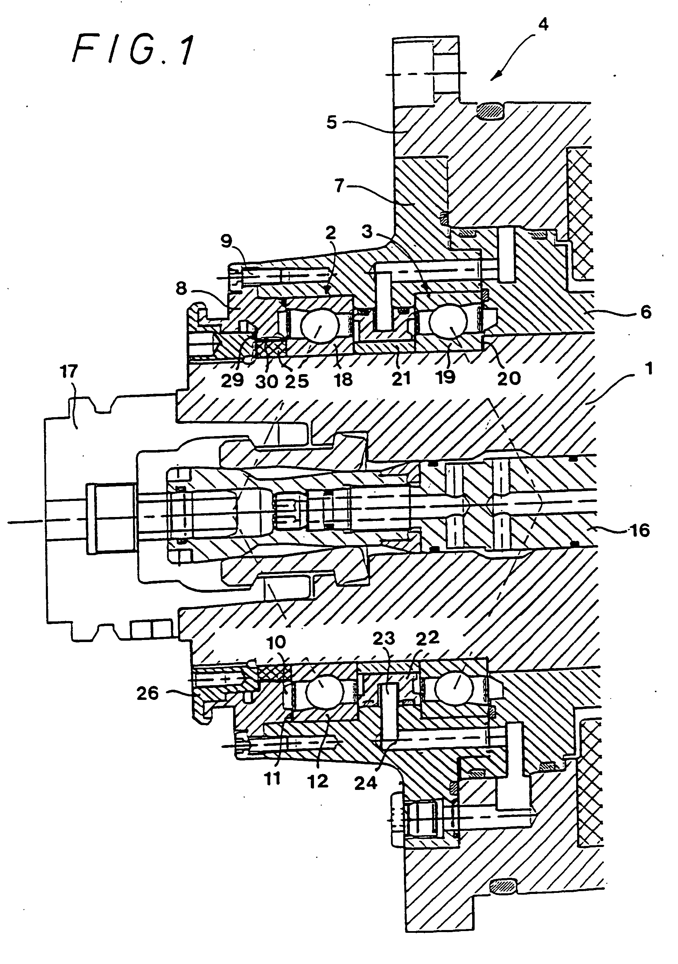

Bei der Ausführung nach Fig. 1, 2 ist erfindungsgemäß zwischen dem radial äußeren Abschnitt dieser Stirnfläche 27 und dem radialen Flächenabschnitt 13 des Gehäuseabschlußringes 8 ein in Fig. 1 mit 29 bezeichneter, durchgehender Radialspalt von genau dimensionierter Spaltweite vorgesehen, dessen Funktion im folgenden ausführlicher beschrieben wird. Ein weiterer, ebenfalls genau dimensionierter Umfangsspalt 30 ist zwischen der Mantelfläche des Distanzrings 25 und der dieser gegenüberliegenden inneren Umfangsfläche des Gehäuseabschlußringes 8 ausgebildet. Neben diesen beiden Spalten 29, 30 mit genau dimensionierter Spaltweite existiert noch ein breiterer durchgehender Spalt zwischen den rotierenden Spindelteilen und den drehfesten Gehäuseteilen, um überhaupt eine Rotationsbewegung des Spindelkörpers im Gehäuse zu ermöglichen. Die Weite dieses durchgehenden Spaltes ist jedoch überall so bemessen, daß auch bei extremen Belastungsspitzen die der Spindel zugehörigen drehbaren Bauelemente nicht mit den dem Gehäuse zugehörigen, drehfesten Bauteilen in Kontakt gelangen können.

Die beiden erfindungsgemäß vorgesehenen Spalte 29 und 30 dienen dem Schutz der vorderen Wälzlager 2, 3 gegen Überlastung durch auf das eingespannte Werkzeug oder den Spindelkörper einwirkende Belastungsspitzen. Wenn das Werkzeug bei stillstehender Spindel durch eine Vorschubbewegung in der Spindelachse ausfährt und dabei auf ein festes Bauteil, beispielsweise auf das Werkstück stößt, wird der dadurch verursachte Schlag in axialer Richtung über den Werkzeughalter 17 auf die Spindel 1 übertragen. Bei den bisher verwendeten Ausführungen wurden die durch diesen Schlag verursachten Stoßkräfte von der Spindel allein über die Wälzlager in die formsteifen Gehäuseteile eingeleitet, was bei höheren Belastungen zu den eingangs genannten Beschädigungen insbesondere des vordersten Wälzlagers führte. Das Vorsehen des genau dimensionierten, in radialer Richtung verlaufenden Ringspaltes 29 bewirkt, daß normale axiale Stoßbelastungen der Spindel über die Gewindebuchse 26, den Distanzring 25 und das vordere Wälzlager 2 in den Gehäuseteil 7 eingeleitet werden, solange diese Stoßbelastungen einen vorgegebenen Wert nicht überschreiten. Mit Größerwerden dieser Stoßbelastungen vermindert sich die Weite des Radialspaltes 29. Bei einer bestimmten Größe dieser Stoßbelastungen ist der Radialspalt 29 geschlossen, sodaß der radial äußere Abschnitt der hinteren Stirnfläche 27 der Gewindebuchse 26 an dem gegenüberliegenden Flächenabschnitt 13 des Gehäuseabschlußrings 8 anliegt. Damit werden die auf die Spindel 1 einwirkenden Stoßbelastungen über die Gewindebuchse 26 und die Ringflächenpaarung 13, 27 direkt in den Gehäuseabschlußring 8 eingeleitet, der starr mit dem Lagergehäuse 7 des Gehäuses 4 verbunden ist. Dies bedeutet, daß die axialen Spitzenkräfte nicht mehr über den Distanzring 25 auf die innere Lagerschale 18 einwirken, wodurch das vordere Wälzlager 2 dann vor extremen Beanspruchungen geschützt ist.

Die Weite dieses erfindungsgemäßen Radialspaltes 29 wird auf der Grundlage von verschiedenen konstruktiven und betriebstechnischen Parametern so gewählt, daß die auftretenden Belastungen bis zu einem noch unschädlichen Wert in herkömmlicher Weise über das vordere Wälzlager 2 in das Gehäuse 4 eingeleitet werden, wobei sich die Spaltweite dieses Spaltes 29 entsprechend der Größe der axialen Belastung vermindert. Unterhalb der für das Wälzlager 2 kritischen Belastung ist der Spalt 29 bereits geschlossen, sodaß ab diesem Moment die axialen Belastungskräfte direkt in den Gehäuseabschlußring 8 eingeleitet werden. Es liegt auf der Hand, daß die Weite dieses Radialspaltes 29 und auch des Umfangsspaltes 30 jeweils nach den spezifischen Parametern der Spindelausführung gewählt werden.

Ähnliche Wirkungen und Effekte ergeben sich dann, wenn die stillstehende Spindel durch eine seitliche Relativbewegung mit einem Maschinenteil, bzw. einem Werkstück, kollodiert, wodurch dann vorzugsweise radial- oder schräggerichtete Belastungen auf die Spindel einwirken, die bei den bisher gebräuchlichen Spindeleinheiten ebenfalls ausschließlich über die Wälzlager in das Gehäuse eingeleitet wurden. Zum Schutz insbesondere des vorderen Wälzlagers 2 dient der erfindungsgemäße Umfangsspalt 30 zwischen dem Distanzring 25 und der Gegenfläche des Gehäuseabschlußringes 8, dessen Spaltweite entsprechend den jeweiligen Konstruktions- und Betriebsparametern der Spindelausführung im Bereich von etwa 50 bis 120 µm dimensioniert wird.

Wenn während eines Bearbeitungsvorganges bei hochtourig umlaufender Spindeleinheit axial oder schräg gerichtete Belastungsspitzen auftreten, deren Größe die vorgenannten Grenzwerte übersteigen, d.h. ein Schließen des einen oder anderen Spaltes 29, 30 zur Folge haben, kann an der dann vorliegenden Flächenpaarung ein Reibschweißvorgang entstehen, dessen Intensität in Grenzen zu halten ist, um ein Festfressen der Spindel zu verhindern. Dieser Fall tritt allerdings in der Praxis sehr selten auf, und zwar wenn durch Fehlverhalten im Betrieb die vom Hersteller vorgegebenen Maximalbelastungen überschritten werden. Um die schädlichen Auswirkungen eines solchen Reibschweißvorganges bei extrem hohen Belastungen zu vermindern, besteht der Distanzring 25, der Gewindering 26 und der Gehäuseabschlußring 8 zumindest in den die Spalte 29, 30 begrenzenden Wandbereichen aus Materialien, die unter dem Gesichtspunkt einer hohen Warmfestigkeit und/oder guter Gleiteigenschaften bei hohen Temperaturen ausgewählt worden sind. Zu solchen Materialien gehören beispielsweise spezielle keramische Werkstoffe, ggf. mit Faserverstärkung, Hartstähle, Messing, Bronze, jeweils allein oder in Paarung. Die jeweiligen Flächen dieser Bauteile können auch mit derartigen Materialien in geeigneter Dicke beschichtet sein, um extrem hohen Temperaturen im Bereich der Reibflächenpaarung entgegenzuwirken und/oder Verschweißerscheinungen zu begegnen.

Die in Fig. 3 in vergrößertem Axialschnitt dargestellte Variante entspricht in ihrem konstruktiven Aufbau der Ausführung nach Fig. 1, 2, so daß entsprechende Bauteile durch gleiche Bezugszeichen gekennzeichnet sind. Im Unterschied zu der Ausführung nach Fig. 1, 2, ist bei der Variante nach Fig. 3 der erfindungsgemäß dimensionierte radiale Ringspalt 40 zwischen einer rückseitigen Ringschulter des Gewinderings 26a und einer vorderseitigen Ringfläche des Gehäuseabschlußrings 8a ausgebildet. Die Weite dieses Ringspaltes 40 liegt wie bei der Ausführung nach Fig. 1, 2 im Bereich von etwa 10 bis 80 µm und wird nach den spezifischen Gegebenheiten und Parametern für den jeweiligen Spindeltyp festgelegt. Bei der Variante nach Fig. 3 hat der auf dem vorderen Endteil der Spindel 1 befestigte Gewindering 8a einen radial inneren Ansatz 41, dessen Endfläche an der Stirnfläche des hier schmaler ausgebildeten, auf der Spindel 1 z.B. durch Aufschrumpfen befestigten Distanzringes 25a anliegt. Zwischen der äußeren Umfangsfläche dieses Distanzrings 25a und der Gegenfläche am Gehäuseabschlußring 8a ist ein relativ weiter Ringspalt vorgesehen, dessen Spaltweite einen Kontakt beider Bauteile 25a, 8a auch bei extrem hohen Belastungsspitzen ausschließt. Der erfindungsgemäße genau dimensionierte Umfangsspalt 39, der funktional dem Umfangsspalt 30 der Ausführung nach Fig. 1, 2 entspricht, befindet sich bei der Variante nach Fig. 3 zwischen der äußeren Umfangsfläche des inneren Ansatzes 41 des Gewinderings 26a und einer inneren Umfangsfläche des Gehäuseabschlußrings 8a. Die vorstehend beschriebene Variante nach Fig. 3 hat den Vorteil einer vereinfachten Wartung und Inspektion, da der Distanzring 25a den Einflüssen der Belastungsspitzen entzogen ist und auf der Spindel 1 verbleiben kann. Die beiden hinsichtlich der Belastungsspitzen relevanten Ring- bzw.

Umfangsspalte 39, 43 befinden scih zwischen dem Gewindering 26a und dem Gehäuseabschlußring 8a, wobei diese beiden Bauteile auf einfache Weise durch Lösen der jeweiligen Schraubverbindungen ausgebaut und ggf. ersetzt werden können. Dadurch wird eine mehrstündige Einsparung an Montagezeit erzielt.

Die Erfindung ist nicht auf das dargestellte Ausführungsbeispiel beschränkt, sondern erstreckt sich auch auf Spindeleinheiten, bei denen andere Ringspalte und/oder Umfangsspalte zwischen drehenden Spindelteilen und ortsfesten Gehäuseteilen in der vorgenannten Weise dimensioniert werden, um gegenüber Last empfindlich reagierende Bauelemente zu schützen.

## Patentansprüche

1. Schnellauf-Spindeleinheit für Fräs- und Bohrmaschinen mit
- einem Spindelgehäuse (4, 7) an dessen vorderem Endteil (7) eine Gehäuseabschlußbuchse (8, 8a) lösbar befestigt ist, und
- einer im Spindelgehäuse (4, 7) in zumindest einem vorderen Wälzlager (2) gelagerten drehangetriebenen Werkzeugspindel (1), auf deren vorderem Endteil ein Gewindering (26, 26a) befestigt ist, wobei zwischen der Gehäuseabschlußbuchse (8, 8a) und dem Gewindering (26, 26a) ein Radialspalt (29, 40) und ein Umfangsspalt (39) ausgebildet sind, deren Spaltweite sich mit zunehmender Belastung der Spindel (1) verringert,
**dadurch gekennzeichnet, daß**
- die Spaltweite des Radialspalts (29, 40) und die des Umfangsspalts (39) zwischen 50 und 120 µm vordimensioniert ist und sich mit zunehmender Belastung der Spindel (1) bis zur direkten Anlage des rotierenden Gewinderings (26, 26a) an der drehfesten Gehäuseabschlußbuchse (8, 8a) auf Null verringert,
- so daß bei Erreichen eines auf die Spindel (1) einwirkenden Belastungswertes die beiden Stirnflächen des Radialspalts (29, 40) oder die beiden Mantelflächen des Umfangsspalts (39) in gegenseitigen Kontakt gelangen und daraufhin die Belastung direkt von dem rotierenden Gewindering (26, 26a) auf das drehfeste Gehäusebauteil unter Umgehung des Wälzlagers (2) übertragen wird.

2. Schnellauf-Spindeleinheit nach Anspruch 1,
**dadurch gekennzeichnet, daß**
der vordimensionierte Umfangsspalt (30) zwischen einem auf der Spindel (1) vor dem vorderen Wälzlager (2) befestigten Distanzring (25) und der Gehäuseabschlußbuchse (8) ausgebildet ist.

3. Schnellauf-Spindel nach Anspruch 1,
**dadurch gekennzeichnet, daß**
der vordimensionierte Umfangsspalt (39) zwischen der Gehäuseabschlußbuchse (8a) und dem auf der Spindel lösbar befestigten Gewindering (26a) ausgebildet ist.

4. Schnellauf-Spindeleinheit nach einem der vorstehenden Ansprüche,
**dadurch gekennzeichnet, daß**
die den Radialspalt (29, 40) und den Umfangsspalt (30, 39) begrenzenden Bauteile zumindest im Bereich der jeweiligen Reibflächenpaarung aus einem gegen Reibverschleiß widerstandsfähigen Material bestehen oder mit einem derartigen Material beschichtet sind.

## Claims

1. High-speed spindle unit for milling and drilling machines having
- a spindle housing (4, 7), to the front end part (7) of which a housing closure bushing (8, 8a) is releasably attached, and
- a rotationally driven tool spindle (1) which is mounted in the spindle housing (4, 7) in at least one front roller bearing (2), on the front end part of which tool spindle a threaded ring (26, 26a) is attached, wherein between the housing closure bushing (8, 8a) and the threaded ring (26, 26a) a radial gap (29, 40) and a circumferential gap (39) are formed, the gap width of which is reduced as the loading on the spindle (1) increases,
**characterised in that**
- the gap width of the radial gap (29, 40) and that of the circumferential gap (39) is pre-dimensioned between 50 and 120µm and is reduced to zero as the loading on the spindle (1) increases until the rotating threaded ring (26, 26a) lies directly against the rotationally fixed housing closure bushing (8, 8a),
- so that when a loading value acting on the spindle (1) is reached the two end-face surfaces of the radial gap (29, 40) or the two surfaces of the circumferential gap (39) come into mutual contact and then the loading is transferred directly from the rotating threaded ring (26, 26a) to the rotationally fixed housing component while bypassing the roller bearing (2).

2. High-speed spindle unit as claimed in claim 1, **characterised in that** the pre-dimensioned circumferential gap (30) is formed between a spacer ring (25), which is attached to the spindle (1) in front of the front roller bearing (2), and the housing closure bushing (8).

3. High-speed spindle as claimed in claim 1, **characterised in that** the pre-dimensioned circumferential gap (39) is formed between the housing closure bushing (8a) and the threaded ring (26a) which is releasably attached to the spindle.

4. High-speed spindle unit as claimed in any one of the preceding claims, **characterised in that,** at least in the region of the respective friction surface pairing, the components defining the radial gap (29, 40) and the circumferential gap (30, 39) consist of a material which is resistant to frictional wear or are coated with such a material.

## Revendications

1. Unité de broche à haute vitesse pour perceuses et fraiseuses, comprenant
- un boîtier porte-broche (4, 7) sur la partie terminale avant (7) duquel est fixé de manière amovible un manchon de fermeture du boîtier (8, 8a), et
- une broche à outil (1) entraînée en rotation, située dans le boîtier porte-broche (4, 7) dans au moins un palier à billes avant (2), sur la partie terminale avant de laquelle est fixé un anneau taraudé (26, 26a), où une fente radiale (29, 40) et une fente périphérique (39), dont la largeur de fente se réduit à mesure que la sollicitation qui s'exerce sur la broche (1) augmente, sont formées entre le manchon de fermeture du boîtier (8, 8a) et l'anneau taraudé (26, 26a),
**caractérisée en ce que**
- la largeur de fente de la fente radiale (29, 40) et celle de la fente périphérique (39) sont dimensionnées au préalable pour se situer entre 50 et 120 µm et se réduit jusqu'à zéro à mesure que la sollicitation sur la broche (1) augmente jusqu'à la mise en place directe de l'anneau taraudé (26, 26a) rotatif contre le manchon de fermeture du boîtier résistant en rotation (8, 8a),
- de sorte que, lorsqu'une valeur de sollicitation agissant sur la broche (1) est atteinte, les deux surfaces frontales de la fente radiale (29, 40) ou les deux surfaces externes de la fente périphérique (39) viennent en contact réciproque et qu'ensuite, la sollicitation est transférée directement de l'anneau taraudé rotatif (26, 26a) jusqu'au composant du boîtier résistant en rotation en contournant le palier à billes (2).

2. Unité de broche à haute vitesse selon la revendication 1, **caractérisée en ce que** la fente périphérique (30) dimensionnée au préalable est formée entre un anneau de distanciation (25) fixé sur la broche (1) avant le palier à billes avant (2) et le manchon de fermeture du boîtier (8).

3. Unité de broche à haute vitesse selon la revendication 1, **caractérisée en ce que** la fente périphérique (39) dimensionnée au préalable est formée entre le manchon de fermeture du boitier (8a) et l'anneau taraudé (26a) fixé de manière amovible sur la broche.

4. Unité de broche à haute vitesse selon l'une des revendications précédentes, **caractérisée en ce que** les composants délimitant la fente radiale (29, 40) et la fente périphérique (30, 39) sont réalisés, au moins dans la zone de l'accouplement respectif des surfaces de frottement, en un matériau résistant à l'usure par frottement ou sont revêtus d'un tel matériau.
